# EUROPEAN PATENT APPLICATION

(11) **EP 4 790 595 A1**
(43) Date of publication of application: **12.08.2026**
(21) Application number: 25768541.2
(22) Date of filing: 26.02.2025
(51) Int. Cl.: G06N 3/063, G06N 3/048, G06N 3/0495, G06F 7/483, G06F 17/16, G06F 17/17, G06F 8/41

(54) **ELECTRONIC DEVICE AND CONTROL METHOD THEREOF**

(30) Priority: 07.03.2024 KR 20240032299; 22.10.2024 KR 20240144863
(71) Applicant: Samsung Electronics Co., Ltd., Suwon-si, Gyeonggi-do 16677 (KR)
(72) Inventor: CHO, Hanjoo, Suwon-si Gyeonggi-do 16677 (KR); KIM, Jooeun, Suwon-si Gyeonggi-do 16677 (KR); PARK, Meejeong, Suwon-si Gyeonggi-do 16677 (KR); CHOI, Minseop, Suwon-si Gyeonggi-do 16677 (KR)
(74) Representative: Appleyard Lees IP LLP
(86) International application number: PCT/KR2025/002711
(87) International publication number: WO 2025/188017

(57) **Abstract**

An electronic device, including: at least one processor configured to accelerate at least one operation of a neural network model; and a memory configured to store instructions which cause the electronic device to: identify a range of input values corresponding to each layer from among a plurality of layers related to a nonlinear activation function of the neural network model, divide the range of input values into a plurality of sections having a first predetermined number for the each layer based on the range of input values, acquire, for the each layer, a first look up table (LUT) including a plurality of integer input values and a plurality of integer output values by quantizing input data corresponding to the neural network model based on the plurality of sections, and process an operation according to the nonlinear activation function as an integer operation based on the first LUT.

## Description

### [Technical Field]

The present disclosure relates to an electronic device and a controlling method of an electronic device, and more particularly, to an electronic device capable of accelerating an operation of a neural network model and a controlling method thereof.

### [Background Art]

Recently, research on neural network accelerators for efficiently processing neural network model operations has been attracting attention.

Operations performed through layers of a neural network model may be performed using linear activation functions and nonlinear activation functions. Therefore, a neural network accelerator may include a matrix operation accelerator, which may be referred to as a multiply-accumulate (MAC) array, for accelerating operations based on linear activation functions, and an activation unit for accelerating operations based on nonlinear activation functions.

Here, the operation based on the nonlinear activation function may be more complex than the operation based on the linear activation function, and therefore, when the nonlinear activation function is processed as an integer operation, the efficiency of the neural network accelerator may be significantly improved.

One approach includes performing polynomial approximation for the nonlinear activation function. However, this approach may have a limitation in that it greatly reduces accuracy. In addition, in order to resolve the accuracy reduction, fine-tuning through retraining of the neural network model should be performed or the model should be trained from the beginning using an approximation function, and multiple iterations may be required.

In addition, one approach may include processing the nonlinear activation function uses a look up table (LUT). However, there may be a limit to accuracy when processing multiple nonlinear activation functions using one LUT, or processing operations on input values of an entire section using one LUT.

### [Disclosure]

### [Technical Solution]

Provided are an electronic device that may accurately and efficiently process an operation on a nonlinear activation function associated with a neural network model, and a control method thereof.

Additional aspects will be set forth in part in the description which follows and, in part, will be apparent from the description, or may be learned by practice of the presented embodiments.

In accordance with an aspect of the disclosure, an electronic device includes: at least one processor configured to accelerate at least one operation of a neural network model; and a memory configured to store data associated with the neural network model, and instructions which, when executed by the at least one processor, cause the electronic device to: identify a range of input values corresponding to each layer from among a plurality of layers related to a nonlinear activation function of the neural network model, divide the range of input values into a plurality of sections having a first predetermined number for the each layer based on the range of input values, acquire, for the each layer a first look up table (LUT) may include a plurality of integer input values corresponding to the plurality of sections, and a plurality of integer output values corresponding to the plurality of integer input values by quantizing input data corresponding to the neural network model based on the plurality of sections, and process an operation according to the nonlinear activation function as an integer operation based on the first LUT.

The plurality of layers may include a first layer corresponding to a first range divided into a first plurality of sections, and a second layer corresponding to a second range divided into a second plurality of sections, and the instructions, when executed by the least one processor, may further cause the electronic device to determine a size of the first plurality of sections to be larger than a size of the second plurality of sections based on the first range being wider than the second range.

The instructions, when executed by the at least one processor, may further cause the electronic device to: divide at least one section from among the plurality of sections into a plurality of detailed sections having a second predetermined number based on determining that the at least one second has an error in an output value that is greater than or equal to a threshold value, acquire a second LUT may include a plurality of detailed integer input values and a plurality of detailed integer output values corresponding to the plurality of detailed sections, and process the operation as the integer operation based on the first LUT and the second LUT.

The instructions, when executed by the at least one processor, may further cause the electronic device to: identify a section corresponding to a first integer output value from among the plurality of sections as the at least one section based on an average error between the first integer output value and real number output values corresponding to the first integer output value being greater than or equal to the threshold value.

The second predetermined number of the plurality of detailed sections may be smaller than the first predetermined number of the plurality of sections.

The input data may be quantized into sixteen bits, the plurality of integer input values and the plurality of integer output values included in the first LUT may be quantized into eight bits, and The plurality of detailed integer input values and the plurality of detailed integer output values included in the second LUT may be quantized into four bits.

The instructions, when executed by the at least one processor, may further cause the electronic device to: identify a first section corresponding to a first input value and a second section subsequent to the first section using the first LUT based on the first input value being received, acquire an integer output value corresponding to a real number input value by linearly interpolating a first integer output value corresponding to the first section and a second integer output value corresponding to the second section from among the plurality of integer output values, and acquire a real number output value corresponding to the real number input value by converting the integer output value into a real number based on a parameter used for the quantizing.

The plurality of integer input values and the plurality of integer output values included in the first LUT may be quantized based on a value corresponding to an upper eight bits from among the sixteen bits, and the instructions, when executed by the at least one processor, may further cause the electronic device to linearly interpolate the first integer output value and the second integer output value using a value corresponding to a lower eight bits from among the sixteen bits as a weight.

The instructions, when executed by the at least one processor, may further cause the electronic device to: divide the nonlinear activation function into a plurality of operations based on the nonlinear activation function being an activation function in which each input value is affected by a different input value, acquire the first LUT for performing at least one nonlinear operation from among the plurality of operations, and process the at least one nonlinear operation as the integer operation based on the first LUT.

In accordance with an aspect of the disclosure, a method for controlling an electronic device, includes: identifying a range of input values corresponding to each layer from among a plurality of layers related to a nonlinear activation function of a neural network model; dividing the range of input values into a plurality of sections having a first predetermined number for the each layer based on the range of input values; acquiring, for the each layer, a first look up table (LUT) may include a plurality of integer input values corresponding to the plurality of sections and a plurality of integer output values corresponding to the plurality of integer input values by quantizing input data corresponding to the neural network model based on the plurality of sections; and processing an operation according to the nonlinear activation function as an integer operation based on the first LUT.

The plurality of layers may include a first layer corresponding to a first range divided into a first plurality of sections, and a second layer corresponding to a second range divided into a second plurality of sections, and the method may further include: determining a size of the first plurality of sections to be larger than a size of the second plurality of sections based on the first range being wider than the second range.

The method may further include: dividing at least one section from among the plurality of sections into a plurality of detailed sections having a second predetermined number based on determining that the at least one section has an error in an output value that is greater than or equal to a threshold value; acquiring a second LUT may include a plurality of detailed integer input values and a plurality of detailed integer output values corresponding to the plurality of detailed sections; and processing the operation as the integer operation based on the first LUT and the second LUT.

The dividing of the at least one section into the plurality of detailed sections may include: identifying a section corresponding to a first integer output value from among the plurality of sections as the at least one section based on an average error between the first integer output value and real number output values corresponding to the first integer output value being greater than or equal to the threshold value.

The second predetermined number of the plurality of detailed sections may be smaller than the first predetermined number of the plurality of sections.

The input data may be quantized into sixteen bits, the plurality of integer input values and the plurality of integer output values included in the first LUT may be quantized into eight bits, and the plurality of detailed integer input values and the plurality of detailed integer output values included in the second LUT may be quantized into four bits.

### [Description of Drawings]

The above and other aspects, features and advantages of certain embodiments of the present disclosure will be more apparent from the following detailed description taken in conjunction with the accompanying drawings, in which:
FIG. 1 is a block diagram schematically illustrating a configuration of an electronic device according to one or more embodiments of the present disclosure;
FIG. 2 is a flow diagram for describing an embodiment related to generating a second look-up table (LUT) for a plurality of detailed sections;
FIG. 3 is a graph for describing an embodiment related to acquiring a second LUT for the plurality of detailed sections;
FIG. 4 is a diagram illustrating one or more embodiments related to dividing a nonlinear activation function into a plurality of operations;
FIG. 5 is a block diagram illustrating in detail a configuration of an electronic device according to one or more embodiments of the present disclosure; and
FIG. 6 is a flow diagram illustrating a controlling method of an electronic device according to one or more embodiments of the present disclosure.

### [Mode for Invention]

Because the disclosure may be variously modified and may have several embodiments, some specific embodiments of the disclosure are illustrated in the drawings and be described in detail in a detailed description. However, it is to be understood that the disclosure is not limited to these particular embodiments, but include various modifications, equivalents, and/or alternatives according to embodiments of the disclosure. Throughout the accompanying drawings, similar components may be denoted by similar reference numerals.

In describing the present disclosure, when it is determined that a detailed description for some functions or configurations related to the present disclosure may unnecessarily obscure the gist of the present disclosure, the detailed description thereof may be omitted.

In addition, the particular embodiments described below may be modified in multiple different forms, and the scope and spirit of the disclosure are not limited to the these particular embodiments. Rather, the description below is provided to convey a technical spirit of the disclosure to those skilled in the art.

Terms used in the disclosure are used only to describe specific embodiments rather than limiting the scope of the disclosure. Singular forms include plural forms unless the context clearly indicates otherwise.

In the specification, expressions such as "have", "may have", "include", "may include", and the like, may be used to indicate existence of a corresponding feature (for example, a numerical value, a function, an operation, a component such as a part, or the like), and do not exclude existence of an additional feature.

In the disclosure, expressions such as "A or B", "at least one of A and/or B", and "one or more of A and/or B", may include all possible combinations of items enumerated together. For example, expressions such as "A or B", "at least one of A and B", and "at least one of A or B" may indicate all of 1) a case where at least one A is included, 2) a case where at least one B is included, and 3) a case where both of at least one A and at least one B are included.

Expressions such as "first" and "second" used in the disclosure may indicate various components regardless of a sequence and/or importance of the components, and may be used only to distinguish one component from the other components, and do not limit the corresponding components.

When a component (for example, a first component) is described as being (operatively or communicatively) coupled with/to or is connected to another component (for example, a second component), it is to be understood that the component may be directly coupled to the other component, or may be coupled to another component through a different component (for example, a third component).

However, when any component (for example, a first component) is described as being "directly coupled" or "directly connected" to another component (for example, a second component), it is to be understood that a different component (for example, a third component) is not present between the component and the other component.

An expression "configured (or set) to" used in the disclosure may be replaced by an expression "suitable for", "having the capacity to" "designed to", "adapted to", "made to", or "capable of" depending on a relevant context. A term "configured (or set) to" may not necessarily mean "specifically designed to" in hardware.

Instead, in some situations, an expression "apparatus configured to" may mean that the apparatus may "do" something together with other apparatuses or components. For example, a "processor configured (or set) to perform A, B, and C" may mean a dedicated processor (for example, an embedded processor) for performing the corresponding operations or a generic-purpose processor (for example, a central processing unit (CPU) or an application processor) that may perform the corresponding operations by executing one or more software programs stored in a memory device.

In embodiments, a module or an element ending in a suffix such as "er/or" (which may be referred to as an "-er/or" element) may perform at least one function or operation, and may be implemented by hardware or software or be implemented by a combination of hardware and software. In addition, a plurality of modules or a plurality of "-er/or" elements may be integrated in at least one module and be implemented by at least one processor except for a module or an "-er/or" element that needs to be implemented by specific hardware.

According to one or more embodiments, various elements and regions in the drawings may be illustrated schematically. Therefore, the scope of the disclosure is not limited by relative sizes or intervals illustrated in the accompanying drawings.

Hereinafter, embodiments of the disclosure are described in detail with reference to the accompanying drawings so that those skilled in the art to which the disclosure pertains may more easily practice the disclosure.

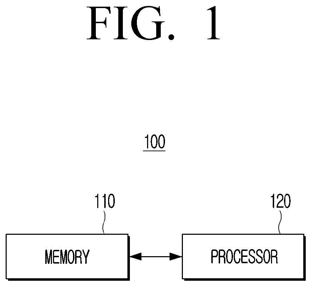

FIG. 1 is a block diagram schematically illustrating a configuration of an electronic device 100 according to one or more embodiments of the present disclosure.

As illustrated in FIG. 1, the electronic device 100 according to the present disclosure may include a memory 110 and a processor 120.

At least one instruction regarding the electronic device 100 may be stored in the memory 110. The memory 110 may store an operating system (O/S) for driving the electronic device 100. In addition, the memory 110 may store various software programs or applications for operating the electronic device 100 according to various embodiments of the present disclosure. In addition, the memory 110 may include at least one of a semiconductor memory such as a flash memory or the like, and a magnetic storage medium such as a hard disk or the like.

For example, various software modules for operating the electronic device 100 according to various embodiments of the present disclosure may be stored in the memory 110, and the processor 120 may execute various software modules stored in the memory 110 to control the operation of the electronic device 100. That is, the memory 110 may be accessed by the processor 120, and readout, recording, correction, deletion, update, and the like, of data in the memory 110 may be performed by the processor 120.

In the present disclosure, the term "memory 110" may be used to refer to at least one from among the memory 110 as described above, a read only memory (ROM) in the processor 120, a random access memory (RAM), and a memory card (for example, a micro secure digital (SD) card or a memory stick) mounted in the electronic device 100.

In one or more embodiments, the memory 110 may store data for a neural network model. For example, the memory 110 may store data for various parameters including layers, activation functions, and weights of the neural network model. In addition, the memory 110 may store various data for performing acceleration of the neural network model. For example, the memory 110 may store data for a look up table (LUT) according to the present disclosure, and data for a quantization process (or calibration process) of data for the neural network model.

In addition, various pieces of information within the scope for achieving the object of the present disclosure may be stored in the memory 110, and the information stored in the memory 110 may be updated as received from an external device or input by a user.

The processor 120 may control the overall operation of the electronic device 100. For example, the processor 120 may be connected to the configuration of the electronic device 100 including the memory 110, and may execute at least one instruction stored in the memory 110 as described above to control the overall operation of the electronic device 100.

The processor 120 may be implemented in various manners. For example, the processor 120 may be implemented by, or may include, at least one of an application specific integrated circuit (ASIC), an embedded processor, a microprocessor, a hardware control logic, a hardware finite state machine (FSM), or a digital signal processor (DSP). In the present disclosure, the term "processor 120" may be used to refer to at least one from among a central processing unit (CPU), a graphic processing unit (GPU), a micro processing unit (MPU), and the like.

In one or more embodiments, the processor 120 may perform an integer operation corresponding to a nonlinear activation function of the neural network model. Hereinafter, various embodiments implemented using the processor 120 are described.

The processor 120 may accelerate the operation of the neural network model. The processor 120 may process at least some of the operations performed by the neural network model as integer operations, thereby improving the operation speed of the neural network model and reducing power consumption. In other words, the processor 120 may be, or may include, hardware designed to efficiently perform the operation of the neural network model, and may be referred to as terms such as a neural network accelerator, a neural processing unit (NPU), and an artificial intelligence (AI) accelerator.

Hereinafter, various embodiments implemented by the processor 120 to accelerate the operation of the neural network model re described.

The processor 120 may identify the range of the input values of each of the plurality of layers related to the nonlinear activation function of the neural network model.

According to embodiments, operations performed by the neural network model may be divided into linear operations and nonlinear operations. For example, the neural network model may perform linear operations such as converting input values using a weight matrix, and may also perform nonlinear operations using various types of nonlinear activation functions, examples of which are described below.

An activation function may be a function that determines whether to activate output values of previous layers in the neural network model and generate the output values. For example, in a feedforward process of acquiring the output values while transmitting the input values from the input layer to the output layer, the activation function may play a role in determining whether to transmit the input values transmitted from the previous layers to the next layer, and if transmitted, whether to convert the input values into any output values.

A nonlinear activation function may be a function that performs a nonlinear operation in the process of transmitting the input values transmitted from the previous layers to the next layer by the activation function. When the nonlinear activation function is used, nonlinearity may be added to the neural network model, so the neural network model may be implemented in depth.

Examples of the nonlinear activation functions may include various functions such as a sigmoid function, a rectified linear unit (ReLU) function, an exponential linear unit (ELU) function, a Gaussian error linear unit (GELU) function, and a Swish function, but nonlinear activation functions according to the present disclosure are not limited to a specific type of activation function.

The processor 120 may acquire information about the structure of the plurality of layers included in the neural network model, the operations performed by each of the plurality of layers, the type of activation functions associated with each of the plurality of layers, etc., based on data about the neural network model. In particular, the processor 120 may identify at least one nonlinear activation function from among various activation functions included in the neural network model.

When at least one nonlinear activation function is identified, the processor 120 may identify the range of the input values of each of the plurality of layers related to the nonlinear activation function. For example, the processor 120 may identify the range of the input values of each of the plurality of layers by allowing the neural network model to input at least some of the input values included in training data or verification data of the neural network model, or allowing the neural network model to input at least some of the input values included in the sample data having a distribution similar to the training data or the verification data.

Here, the range of the input values may refer to the difference between the maximum and minimum values of the input values that are input to each of the plurality of layers. The range of input values may be different for each of the plurality of layers. For example, the range of input values of the first layer included in the neural network model may be a range from a value "1" to a value "25600", and the range of input values of the second layer included in the neural network model may be a range from a value "1" to a value "256". Because input values for a specific layer may be the output values of the previous layer, the range of input values of each of the plurality of layers may include at least some of the ranges of the output values of each of the plurality of layers. Therefore, the term range of input values may be referred to as a range of input/output values.

The processor 120 may divide the entire section included in the range of the input values into a predetermined number (which may be referred to as a preset number) of sections for each of the plurality of layers based on the range of the input values identified for each of the plurality of layers.

Here, the predetermined number may refer to the number of sections to indicate how many sections the entire section included in the range of the input values are divided into. In embodiments, the entire section may refer to, for example, the entire range of the input values. The predetermined number may be determined based on the number of bits (e.g., eight bits, sixteen bits, etc.) set in the quantization process described below, and may be changed by a developer or user.

The ranges of the input values identified for each of the plurality of layers may be different, but the predetermined number for dividing the entire section included in the range of input values may be the same. Therefore, the entire section of the input values for each of the two different layers may be divided into a plurality of sections having different sizes. For example, the processor 120 may identify or determine a plurality of sections having different sizes for each of the plurality of layers based on the ranges of the input values identified for each of the plurality of layers.

For example, when the range of the input values corresponding to the first layer among the plurality of layers is wider than the range of the input values of the second layer among the plurality of layers, the processor 120 may determine the size of the plurality of sections corresponding to the first layer to be larger than that of the plurality of sections corresponding to the second layer.

For example, when the predetermined number for distinguishing the entire section is 256, if the range of the input values of the first layer is a range from a value "1" to a value "25600", and the range of the input values of the second layer is a range from a value "1" to a value "256", the processor 120 may distinguish the entire section included in the range of the input values of the first layer into 256 sections having a size of "1", and distinguish the entire section included in the range of the input values of the second layer into 256 sections having a size of "100".

The processor 120 may quantize the input data of the neural network model based on the plurality of sections divided by the plurality of layers, thereby acquiring, for each of the plurality of layers, a first LUT including a plurality of integer input values corresponding to each of the plurality of sections and a plurality of integer output values corresponding to each of the plurality of integer input values.

The quantizing or quantization may refer to a process of converting data expressed in relatively high-precision units into data of relatively low precision. For example, the quantization according to the present disclosure may refer to a process of converting data expressed as a real number in a first bit range into data expressed as an integer in a second bit range smaller than the first bit range. For example, when the quantization is performed on data, real number weight data expressed in a 32-bit floating point (FP32) format may be converted into integer weight data expressed in eight bits.

In the present disclosure, an input value before the quantization may be referred to as a real number input value, and an output value before the quantization may be referred to as a real number output value. In addition, an input value after the quantization may be referred to as an integer input value, and an output value after the quantization may be referred to as an integer output value.

For example, the processor 120 may identify or determine a scale and a zero point, which may be parameters used for the quantization, and perform the quantization on the input values using the identified scale and the identified zero point.

The scale may refer to a parameter indicating a conversion ratio between an actual floating point value (e.g., a real number value) and an integer value. For example, the scale may be calculated by dividing the difference between the maximum value and the minimum value included in the range of the input values by a predetermined number. For example, the scale may indicate the size of each of the plurality of sections identified as described above.

When the range of the input values includes a negative number, the zero point may refer to a parameter that represents an integer value when the input value is "0". The zero point may be calculated by rounding a result of dividing a value, which is obtained by multiplying the minimum value included in the range of the input values by "-1", by the scale.

Once the scale and zero point are calculated, the integer input value according to the quantization result may be calculated by rounding the result of dividing the real number input value by the scale and adding the zero point to the rounded value.

For example, when performing 8-bit quantization, when the range of the input values is a range from "-3.5" to "3.2", then a value "0.0263", which is a value obtained by dividing the difference by "255", may be calculated as a scale. Then, a value "133", which is a value obtained by rounding the result of dividing the value, which is obtained by multiplying the minimum value of the input value by -1 by the calculated scale, may be calculated as the zero point. Then, when the real number input value is "1.5", the result of dividing the real number input value by the scale is rounded, and a value "190", which is a value obtained by adding the zero point to the rounded value, may be calculated as an integer input value corresponding to a real number input value of "1.5".

As described above, when the plurality of integer input values corresponding to each of the plurality of sections are acquired, the processor 120 may acquire the plurality of output values corresponding to each of the plurality of integer input values by rounding the result of inputting the plurality of integer input values to the nonlinear activation function.

In addition, the processor 120 may perform the quantization process as described above for each of the plurality of layers, and acquire the LUT based on the quantization result. For example, the processor 120 may acquire, for each of the plurality of layers, the first LUT including the plurality of integer input values and the plurality of integer output values corresponding to each of the plurality of integer input values, and store the first LUT in the memory 110.

Here, the LUT may refer to a table that stores pre-calculated values so that pre-calculated result values for specific input values may be quickly referenced. In particular, the LUT according to the present disclosure may refer to a table that stores the plurality of integer input values and the plurality of integer output values corresponding the plurality of integer input values in correspondence with each other. Any data set that includes the plurality of integer input values, the plurality of integer output values, and the information about the correspondence relationship between the plurality of integer input values and the plurality of integer output values may correspond to the LUT according to the present disclosure, regardless of the term used to refer to such a data set. For example, the term LUT may be replaced with a term such as dictionary or data set.

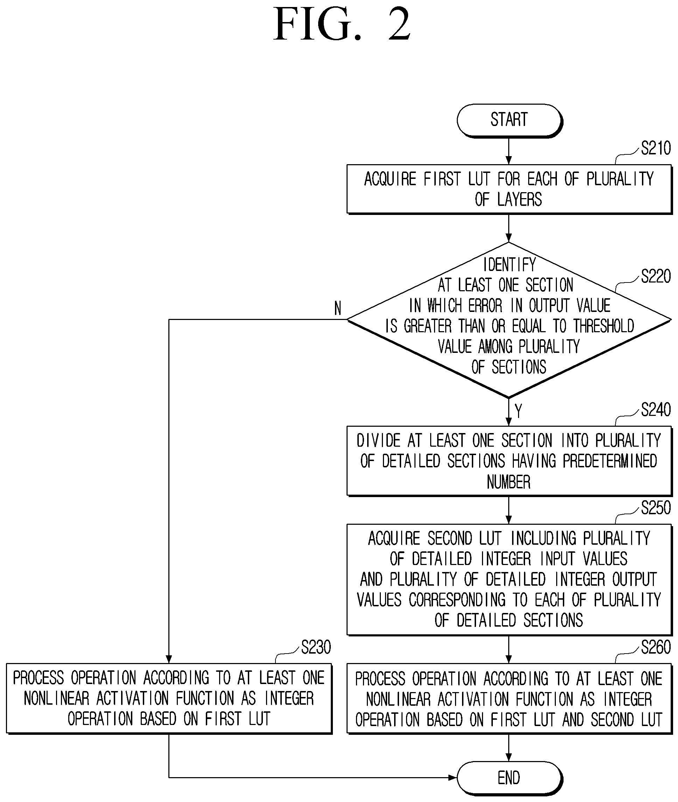

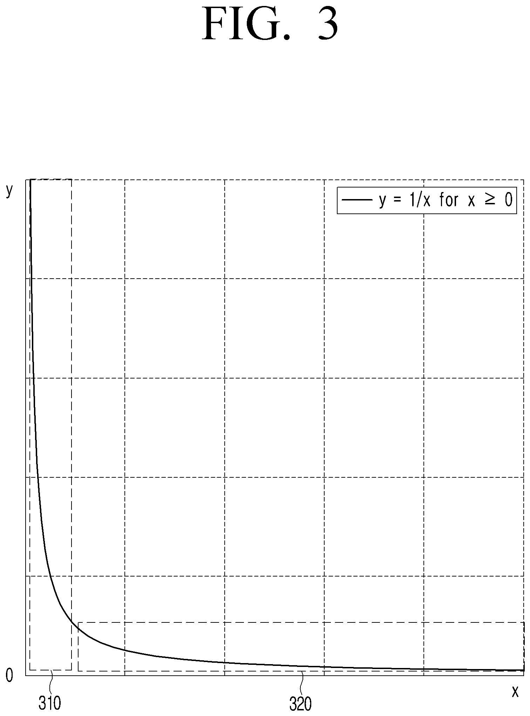

The first LUT may refer to an LUT that includes the plurality of integer input values included in the entire section included in the range of input values and the plurality of integer output values corresponding to each of the plurality of integer input values. The term first LUT is used as a term to distinguish the first LUT from the second LUT that includes only information about some sections (e.g., detailed sections) of the entire section included in the range of the input values. Examples of the meaning and acquisition process of the second LUT are described in detail with reference to FIGS. 2 and 3.

The processor 120 may process an operation according to the at least one nonlinear activation function as an integer operation based on the first LUT. For example, when the plurality of first LUTs corresponding to each of the plurality of layers related to the nonlinear activation function are acquired, the processor 120 may store the plurality of first LUTs in the memory 110. Thereafter, when the input value for the neural network model is input, the processor 120 may process at least some of the operations performed by the neural network model as the integer operations using the plurality of first LUTs stored in the memory 110.

For example, when the first input value is input, the processor 120 may identify or select a first section corresponding to the first input value and a second section, which is a section following the first section (e.g., a section subsequent to the first section), based on the first LUT. When the first section and the second section are identified or selected, the processor 120 may acquire integer output values corresponding to real number input values by linearly interpolating a first integer output value corresponding to the first section and a second integer output value corresponding to the second section among the plurality of integer output values.

For example, when the input first input value is a real number input value of "0.1", the processor 120 may determine that the section corresponding to the first input value of "0.1" is the first section among the plurality of sections. In addition, the processor 120 may determine that "2" is a first integer output value corresponding to the first section among the plurality of sections, and that "3" is a second integer output value corresponding to the second section, which is a section following the first section. The processor may acquire an integer output value corresponding to the first input value by linearly interpolating the value "2" (e.g., the first integer output value) and the value "3" (e.g., the second integer output value).

Here, information about lower bits, and not upper bits, used in the first LUT, may be used as weights for linear interpolation between the first integer output value and the second integer output value. For example, the plurality of integer input values and the plurality of integer output values included in the first LUT may be quantized based on a value corresponding to the upper eight bits of sixteen bits. In this case, the processor 120 may linearly interpolate the first integer output value and the second integer output value by using the value corresponding to the lower eight bits of sixteen bits as a weight.

When the integer output values are acquired, the processor 120 may acquire the real number output values corresponding to the real number input values by converting the integer output values to a real number based on the parameter used for the quantization. However, when the input of the next layer is an integer value, the processor 120 may input the integer output values of the layer to the next layer without converting the integer output values into a real number.

An example in which the first section corresponding to the first input value and the second section, which is the next section after the first section, are identified or selected based on the first LUT is described above. However, the processor 120 may also select the first section corresponding to the first input value and a third section that is a previous section of the first section, and acquire the integer output values corresponding to the real number input value by linearly interpolating the first integer output value corresponding to the first section and the third integer output value corresponding to the third section among the plurality of integer output values.

An example in which the integer output values are acquired using the linear interpolation is described above. However, in addition to linear interpolation, various interpolation methods such as polynomial interpolation may be used.

According to the examples described above, the electronic device 100 may acquire a LUT having different precision according to the range of the input values of each of a plurality of layers, and accurately and efficiently process the integer operation corresponding to the nonlinear activation function of the neural network model based thereon.

For example, the electronic device 100 may generate the LUT for processing the nonlinear activation function as the integer operation using the parameters acquired from the quantization process (or calibration process) of data for the neural network model without a separate re-training or iterative process.

In addition, the electronic device 100 may generate the LUT suitable for the range of input values for each of the plurality of layers instead of processing the plurality of nonlinear activation functions using one LUT, so that a high-precision integer operation accelerator may be implemented even under constraints due to limited hardware size and resources.

For example, even if one LUT may accurately process an operation of the first layer in which the range of the input values is a range from a value "1" to a value "25600", the accuracy loss may be inevitable when processing the second layer in which the range of the input values is a range from a value "1" to a value "256" using the LUT. However, according to the present disclosure, a different LUT may be provided for each layer based on the range of the input values identified for each of the plurality of layers.

The effects described above may be further maximized when performing the operation on the neural network model (e.g., transformer) that includes the activation function having a section in which the output value has a large variability according to the change in the input values, for example an activation function (e.g., 1/x, rsqrt(x)) with a large nonlinearity.

FIG. 2 is a flow diagram for describing an embodiment related to generating a second LUT for a plurality of detailed sections. FIG. 3 is a graph for describing an embodiment related to acquiring a second LUT for the plurality of detailed sections.

Referring to FIG. 2, the processor 120 may acquire the first LUT for each of a plurality of layers at operation S210. As described above, the processor 120 may identify or determine the range of the input values of each of the plurality of layers related to the nonlinear activation function of the neural network model, and the processor 120 may divide the entire section included in the range of the input values into the plurality of sections for each of the plurality of layers based on the range of the input values identified for each of the plurality of layers, and may acquire the first LUT including the plurality of integer input values corresponding to each of the plurality of sections and the plurality of integer output values corresponding to each of the plurality of integer input values for each of the plurality of layers by quantizing the input data of the neural network model based on the plurality of sections divided for each of the plurality of layers.

Based on the first LUT being acquired, the processor 120 may identify or determine whether there is at least one section among the plurality of sections for which an error in the output values is greater than or equal to a threshold value. For example, based on the average error between the first integer output value among the plurality of integer output values and the real number output values corresponding to the first integer output value being greater than or equal to the threshold value, the processor 120 may identify or select the section corresponding to the first integer output value among the plurality of sections as the at least one section. Hereinafter, a section among the plurality of sections having an error in the output values that is greater than or equal to the threshold value may be referred to as the at least one section.

Here, the average error may be, or may be determined using, one of various average errors such as a mean absolute error (MAE) which indicates the average of the absolute differences between the integer output values and the real number output values, a mean squared error (MSE) which indicates the average of the squared differences between integer output values and real number output values, and a root mean squared error (RMSE) which indicates the square root of the mean squared error.

For example, FIG. 3 illustrates a graph of the function y=1/x, which is an example of a nonlinear activation function, where x denotes the real number input value and y denotes the real number output value. Among the plurality of sections, a section that is included in an area where the variability of the real number output value is large according to the change in the real number input value, such as area 310 of FIG. 3, may express a wide range of output values with a relatively narrow range of input values, so the average error may be greater than or equal to the threshold value.

However, among the plurality of sections, a section that is included in an area where the variability of the real number output value is small according to the change in the real number input value, such as area 320 of FIG. 3, expresses a narrow range of output values with a relatively wide range of input values, so the average error may be less than the threshold value.

Therefore, in the example of FIG. 3, the processor 120 may identify or select the section included in the area 310 of FIG. 3 as the at least one section, and may not identify or select the section included in the area 320 of FIG. 3 as the at least one section.

When at least one of the plurality of sections whose error in the output value is greater than or equal to the threshold value is not identified (N at operation S220), the processor 120 may process an operation according to at least one nonlinear activation function as an integer operation based on the first LUT at operation S230. For example, when the nonlinear activation function does not include a section with a large nonlinearity, the processor 120 may process an operation according to at least one nonlinear activation function as an integer operation based on the first LUT as described with reference to FIGS. 1 and 2 without performing an additional processing process as described below.

When at least one section from among of the plurality of sections is determined to have error in the output values is greater than or equal to the threshold value (e.g., when the at least one section described above is identified or selected) (Y at operation S220), the processor 120 may divide the at least one section into a predetermined number of detailed sections at operation S240. Then, the processor 120 may acquire a second LUT including a plurality of detailed integer input values and a plurality of detailed integer output values corresponding to each of the plurality of detailed sections at operation S250.

For example, the processor 120 may divide the entire section included in the range of the input values into a plurality of sections, and then again divide the at least one section of the plurality of divided sections (e.g., the identified at least section having an error in output values that is greater than or equal to the threshold value) into a plurality of detailed sections. For example, the processor 120 may divide each of the at least one section, such as a section included in the area 310 of FIG. 3, into the plurality of detailed sections, each of which has an average error greater than or equal to the threshold value.

When the plurality of detailed sections are divided, the processor 120 may acquire the plurality of detailed integer input values and the plurality of detailed integer output values corresponding to each of the plurality of detailed sections, and may acquire the second LUT including the plurality of detailed integer input values and the plurality of detailed integer output values for each of the plurality of detailed sections.

In one or more embodiments, a number of the plurality of detailed sections may be smaller than a number of the plurality of sections. For example, when the input data is quantized into sixteen bits, and the plurality of integer input values and the plurality of integer output values included in the first LUT are quantized into eight bits, the plurality of detailed integer input values and the plurality of detailed integer output values included in the second LUT may be quantized into four bits.

For example, because a smaller number of quantization bits may be sufficient for generating a LUT by re-dividing a specific section compared to generating the LUT for the entire section, the number of the plurality of detailed sections may be smaller than the number of the plurality of sections. However, embodiments are not limited thereto.

The processor 120 may process an operation according to at least one nonlinear activation function as the integer operation based on the first LUT and the second LUT at operation S260. For example, the processor 120 may identify or determine whether the input value corresponds to the at least one section. Then, the processor 120 may process an operation according to at least one nonlinear activation function as the integer operation using the second LUT for the input value corresponding to at least one section. However, the processor 120 may process an operation according to at least one nonlinear activation function as the integer operation using the first LUT for the input value that does not correspond to the at least one section.

In the example above, an embodiment is described in which, when at least one section of the entire sections of the input values in which the error in the output value is greater than or equal to the threshold value is identified or selected, an operation according to at least one nonlinear activation function is processed as an integer operation using the first LUT and the second LUT. However, it is also possible to replace the at least one section in the first LUT in which the error in the output value is greater than or equal to a threshold value with the second LUT to acquire one LUT and process the integer operation for the entire section with one LUT.

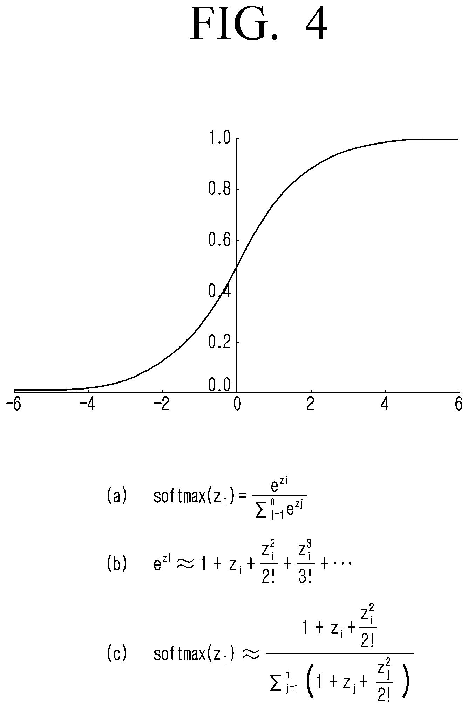

According to the embodiments described above with reference to FIGS. 3 and 4, the electronic device 100 may acquire the first LUT having different precisions according to the input value ranges of each of the plurality of layers, and, when the nonlinear activation function includes the section in which the nonlinearity is greater than or equal to a threshold level, the electronic device 100 may process a more accurate integer operation by using the second LUT, which is more detailed than the first LUT, for the section in which the nonlinearity is greater than or equal to a threshold value.

For example, in the case of the neural network model (e.g., transformer) including an activation function (e.g., 1/x, rsqrt(x)) including a section with high nonlinearity, a problem may arise that in some sections (e.g., a section included in area 320 of FIG. 3), high-precision integer operations may be performed with only the first LUT, but in sections (e.g., a section included in area 310 of FIG. 3) where the variability of the output values according to the change in the input values is high, it may be difficult to perform high-precision integer operations with only the first LUT. According to embodiments described above, this problem may be solved by using the detailed second LUT together with the first LUT.

FIG. 4 is a diagram illustrating one or more embodiments related to dividing a nonlinear activation function into a plurality of operations.

According to one or more embodiments, the processor 120 may divide the nonlinear activation function into the plurality of operations and apply the LUT to the nonlinear operation among the plurality of operations.

The processor 120 may identify or determine whether the nonlinear activation function is the activation function in which each input value is affected by other input values. For example, the processor 120 may determine the activation function defined to produce the output values by using each input value together with other input values, such as a softmax function and a layer normalization function among the nonlinear activation functions of the neural network model.

For example, the graph of FIG. 4 shows a softmax function, which is a type of activation function. The softmax function may apply an exponential function to each element (e.g., input values) of a given input vector and normalize the result to convert the exponential function into a probability distribution. For example, for a given input vector z = [z1, z2, ..., zn], the softmax function may be defined as in equation (a) of FIG. 4. Here, e^{zi} may denote the exponential function value, and the softmax function may return the normalized probability value by dividing each input value by the sum of all exponential function values.

When the nonlinear activation function is an activation function in which each input value is affected by another input value, the processor 120 may divide the nonlinear activation function into the plurality of operations. For example, the processor 120 may divide the nonlinear activation function into the plurality of operations using polynomial approximation. Here, dividing the nonlinear activation function into the plurality of operations may mean dividing the operations included in the nonlinear activation function into simpler operations using the polynomial approximation.

For example, the softmax function of FIG. 4 may be divided into the plurality of polynomials using Taylor series expansion. When the exponential function e^{zi} of the softmax function is expanded into a Taylor series, it may be expressed as in equation (b) of FIG. 4. Then, when the exponential function for each input value (zi) is approximated by an nth-order Taylor polynomial and then normalized, it may be expressed as in equation (c) of FIG. 4.

The processor 120 may acquire the first LUT for performing at least one nonlinear operation among the plurality of operations. The processor 120 may process at least one nonlinear operation as the integer operation based on the first LUT.

For example, when the nonlinear activation function is divided into the plurality of operations, at least some of the plurality of operations may be the linear operations, and the other may be the nonlinear operations. The processor 120 may acquire the first LUT for each of at least one function to process at least one function performing the nonlinear operation among the plurality of functions as the integer operation, and process at least one nonlinear operation as the integer operation using the acquired first LUT.

For example, the result of the polynomial approximation according to the equation (c) of FIG. 4 may be divided into a nonlinear operation including zᵢ² and a linear operation performing a sum operation. The processor 120 may acquire the first LUT for performing a nonlinear operation including zᵢ².

After processing the nonlinear operation as the integer operation using the first LUT, the processor 120 may perform the linear operation to finally acquire the output value of the softmax function corresponding to the input value.

According to the example described above with reference to FIG. 4, the electronic device 100 may perform an accurate and efficient integer operation even for the neural network model (e.g., transformer) including the complex activation function (e.g., softmax function) that has both the linearity and nonlinearity.

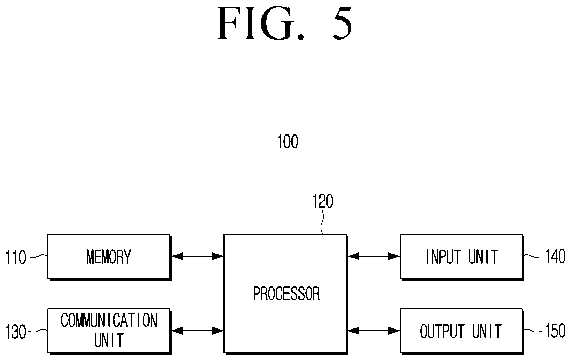

FIG. 5 is a block diagram illustrating in detail a configuration of an electronic device 100 according to one or more embodiments of the present disclosure.

As illustrated in FIG. 5, the electronic device 100 according to one or more embodiments of the present disclosure may further include a communication unit 130, an input unit 140, and an output unit 150, in addition to the memory 110 and the processor 120. However, the configurations illustrated in FIGS. 1 and 5 are merely exemplary, and in carrying out the present disclosure, new configurations may be added or some configurations may be omitted in addition to the configurations illustrated in FIGS. 1 and 5.

The communication unit 130 may include a circuit and may perform communication with an external device. For example, the processor 120 may receive various data or information from an external device connected through the communication unit 130, and may transmit various data or information to the external device.

The communication unit 130 may include at least one of a WiFi module, a Bluetooth module, a wireless communication module, an NFC module, and an ultra-wide band (UWB) module. For example, the WiFi module and the Bluetooth module may each perform communication using WiFi and Bluetooth methods. In the case of using the Wi-Fi module or the Bluetooth module, various connection information such as SSID, is first transmitted and received, communication is connected using the connection information, and various information may then be transmitted and received.

In addition, the wireless communication module may perform communication depending on various communication protocols such as Institute of Electrical and Electronics Engineers (IEEE), Zigbee, 3rd generation (3G), 3rd generation partnership project (3GPP), long term evolution (LTE), and 5th generation (5G). The NFC module may perform communication in an near field communication (NFC) manner using a band of 13.56MHz among various radio frequency identification (RFID) frequency bands such as 135kHz, 13.56MHz, 433MHz, 860 to 960MHz, and 2.45GHz. In addition, the UWB module may accurately measure time of arrival (ToA), which may be the time for a pulse to reach a target, and angle of arrival (AoA), which is an angle of arrival of a pulse at the transmitting device, through communication between UWB antennas, so precise distance and position recognition may be possible indoors within an error range of several tens of centimeters.

In one or more embodiments, the processor 120 may control the communication unit 130 to transmit data about various parameters including layers, activation functions, and weights of a neural network model from an external device, various data for performing acceleration of the neural network model, data about an LUT according to the present disclosure, data about a quantization process (or calibration process) of data about a neural network model, and the like to an external device.

The input unit 140 may include a circuit, and the processor 120 may receive user commands for controlling the operation of the electronic device 100 through the input unit 140. For example, the input unit 140 may be configured to include components such as a microphone, a camera, and a remote control signal receiving unit, etc. The input unit 140 may be a touch screen, and may be implemented as the form included in the display. In particular, the microphone may receive voice signals and convert the received voice signals into electrical signals.

In one or more embodiments, the processor 120 may receive a user input for acquiring the LUT through the input unit 140, a user input for setting the number of the plurality of sections, and a user input (e.g., providing information about the LUT through the display, providing information about the LUT to the user terminal) for providing information about the acquired LUT.

The output unit 150 includes a circuit, and the processor 120 may output various functions that the electronic device 100 may perform through the output unit 150. In addition, the output unit 150 may include at least one of a display, a speaker, and an indicator.

The display may output video data under the control of the processor 120. For example, the display may output videos pre-stored in the memory 110 under the control of the processor 120. In particular, the display according to one or more embodiments of the present disclosure may display a user interface stored in the memory 110. The display may be implemented as a liquid crystal display panel (LCD), organic light emitting diodes (OLED), etc., and in some cases, the display may also be implemented as a flexible display, a transparent display, etc. However, the display according to the present disclosure is not limited to a specific type.

The speaker may output audio data under the control of the processor 120. The indicator may be turned on under the control of the processor 120. For example, the indicator may be turned on in various colors under the control of the processor 120. For example, the indicator may be implemented as light emitting diodes (LEDs), a liquid crystal display panel (LCD), a vacuum fluorescent display (VFD), etc., but is not limited thereto.

In one or more embodiments, the processor 120 may control the display to display the information about the acquired LUT.

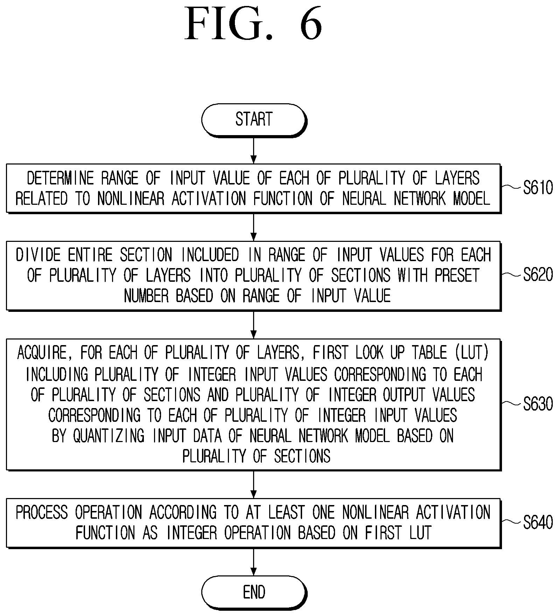

FIG. 6 is a flowchart of a method of controlling the electronic device 100 according to one or more embodiments of the present disclosure.

Referring to FIG. 6, the electronic device 100 may identify or determine the range of input values of each of the plurality of layers related to the nonlinear activation function of the neural network model at operation S610. The electronic device 100 may identify or determine at least one nonlinear activation function among various activation functions included in the neural network model based on data about the neural network model. When at least one nonlinear activation function is identified or determined, the electronic device 100 may identify or determine the range of the input values of each of the plurality of layers related to the nonlinear activation function.

The electronic device 100 may identify or determine the range of the input values of each of the plurality of layers by allowing the neural network model to input at least some of the input values included in training data or verification data of the neural network model, or allowing the neural network model to input at least some of the input values included in the sample data having a distribution similar to the training data or the verification data.

Based on the range of input values, the entire section included in the range of the input values for each of the plurality of layers may be divided into a predetermined number of sections at operation S620. The ranges of the input values identified for each of the plurality of layers may be different, but the predetermined number for dividing the entire section included in the range of input values may be the same. Therefore, the entire section of the input values for each of the two different layers may be divided into a plurality of sections having different sizes.

The electronic device 100 may quantize the input data of the neural network model based on the plurality of sections divided by the plurality of layers, thereby acquiring, for each of the plurality of layers, a first LUT including a plurality of integer input values corresponding to each of the plurality of sections and a plurality of integer output values corresponding to each of the plurality of integer input values at operation S630. For example, the electronic device 100 may acquire, for each of the plurality of layers, the first LUT including the plurality of integer input values and the plurality of integer output values corresponding to each of the plurality of integer input values, and store the first LUT in the memory 110.

The electronic device 100 may process an operation according to the at least one nonlinear activation function as an integer operation based on the first LUT at operation S640. For example, when the plurality of first LUTs corresponding to each of the plurality of layers related to the nonlinear activation function are acquired, the electronic device 100 may store the plurality of first LUTs in the electronic device 100. Thereafter, when the input value for the neural network model is input, the electronic device 100 may process at least some of the operations performed by the neural network model as the integer operations using the plurality of first LUTs stored in the electronic device 100.

The controlling method of the electronic device 100 according to the above-described embodiment may be implemented as a program and provided to the electronic device 100. In particular, a program including the controlling method of the electronic device 100 may be provided by being stored in a non-transitory computer readable medium.

For example, in a non-transitory computer-readable recording medium including a program for executing a controlling method of the electronic device 100, the control method of the electronic device 100 may include identifying or determining the range of the input values of each of the plurality of layers related to the nonlinear activation function of the neural network model, dividing the entire section included in the range of the input values for each of the plurality of layers into the predetermined number of sections based on the range of input values, acquiring, for each of the plurality of layers, the first LUT including the plurality of integer input values corresponding to each of the plurality of sections and the plurality of integer output values corresponding to each of the plurality of integer input values by quantizing the input data of the neural network model based on the plurality of sections, and processing the operation according to at least one nonlinear activation function as the integer operation based on the first LUT.

In the above description, examples of the controlling method of the electronic device 100 and the computer-readable recording medium including the program for executing the controlling method of the electronic device 100 are briefly described, but this is only for omitting redundant description, and it goes without saying that various embodiments of the electronic device 100 are also applicable to the computer-readable recording medium including the controlling method of the electronic device 100 and the program for executing the controlling method of the electronic device 100.

A function related to artificial intelligence according to the present disclosure may be operated or performed using the processor 120 and the memory 110 of the electronic device 100.

The processor 120 may include one or a plurality of processors. In this case, one or more processors 120 may include at least one of a central processing unit (CPU), a graphics processing unit (GPU), and a neural processing unit (NPU), but are not limited to the examples of the processors 120 described above.

The CPU may be a general-purpose processor 120 that may perform not only general operations but also artificial intelligence operations, and may efficiently execute complex programs through a multi-layer cache structure. The CPU may be advantageous for a serial processing method, which may allow organic connection between previous and next operation results through sequential operations. The general-purpose processor 120 is not limited to the above-described examples.

The GPU may be used as the processor 120 for large-scale operations such as floating-point operations used in graphics processing, and may perform the large-scale operations in parallel by integrating a large number of cores. In particular, the GPU may be more advantageous than the CPU in a parallel processing method such as a convolution operation. In addition, the GPU may be used as a co-processor 120 to supplement the functions of the CPU. The processor 120 for the large-scale operation is not limited to the above-described example.

The NPU is the processor 120 specialized in the artificial intelligence operations using the artificial neural network, and each layer included in the artificial neural network may be implemented in hardware (e.g., silicon). In this case, the NPU may be specifically designed according to particular requirements, so it may have a lower degree of freedom than the CPU or GPU, but may efficiently process the artificial intelligence operations corresponding to the requirements. According to one or more embodiments, as the processor 120 specialized for the artificial intelligence operations, the NPU may be implemented in various forms such as a tensor processing unit (TPU), an intelligence processing unit (IPU), and a vision processing unit (VPU). The artificial intelligence processor 120 is not limited to the examples described above.

In addition, one or more processors 120 may be implemented as a System on Chip (SoC). In this case, in addition to one or the plurality of processors 120, the SoC may further include the memory 110 and a network interface such as a bus for data communication between the processor 120 and the memory 110.

When the SoC included in the electronic device 100 includes a plurality of processors 120, the electronic device 100 may use some of the plurality of processors 120 to perform the artificial intelligence-related operations (e.g., artificial intelligence operations related to model learning or inference). For example, the electronic device 100 may perform the artificial intelligence-related operations using at least one of the GPU, NPU, VPU, TPU, or hardware accelerator specialized for the artificial intelligence operations, such as the convolution operation and the matrix multiplication operation, among the plurality of processors 120. However, this is only an example, and it goes without saying that the artificial intelligence-related operations may be processed using the general-purpose processors 120 such as the CPU.

In addition, the electronic device 100 may perform the operations on the functions related to the artificial intelligence using multi cores (e.g., dual core, quad core, etc.) included in one processor 120. In particular, the electronic device 100 may perform the artificial intelligence operations, such as the convolution operation and the matrix multiplication operation, in parallel using the multi-cores included in the processor 120.

One or more processors 120 perform control to process input data according to a predefined operation rule or artificial intelligence model stored in the memory 110. The predefined operation rule or the AI model is characterized by being made through training.

Here, being created through learning may mean that a predefined motion rule or an artificial intelligence model of a desired characteristic is created by applying a learning algorithm to a plurality of training data. Such training may be made in the device itself in which the AI according to the present disclosure is performed, or may be made through a separate server/system.

The AI model may include a plurality of neural network layers. At least one layer may have at least one weight value, and a calculation of the layers may be performed based on a calculation result of a previous layer and at least one defined calculation. Examples of neural networks may include a convolutional neural network (CNN), a deep neural network (DNN), a recurrent neural network (RNN), a restricted Boltzmann machine (RBM), a deep belief network (DBN), a bidirectional recurrent deep neural network (BRDNN), deep Q-networks, and a transformer, and the neural networks in the present disclosure are not limited to the above-described examples except for the case specified.

A learning algorithm may be a method of training a predetermined target device (e.g., a robot) using a large amount of training data so that the predetermined target device may make decisions or make predictions on its own. Examples of the learning algorithms include supervised learning, unsupervised learning, semi-supervised learning, or reinforcement learning, but are not limited to the above examples, and the learning algorithm in the present disclosure is not limited to the examples described above except where explicitly stated.

The machine-readable storage medium may be provided in a form of a non-transitory storage medium. Here, the non-transitory storage medium may mean that the storage medium is a tangible device, and is not solely a transitory signal (for example, electromagnetic waves), and the term does not distinguish between the case where data is stored semi-permanently on a storage medium and the case where data is temporarily stored thereon. For example, the non-transitory storage medium may include a buffer in which data is temporarily stored.

According to one or more embodiments, the methods according to various embodiments disclosed in the present document may be included and provided in a computer program product. The computer program product may be traded as a product between a seller and a purchaser. The computer program product may be distributed in the form of a machine-readable storage medium (for example, compact disc read only memory (CD-ROM)), or may be distributed (for example, download or upload) through an application store (for example, Play Store^{™}) or may be directly distributed (for example, download or upload) between two user devices (for example, smart phones) online. In a case of the online distribution, at least some of the computer program products (for example, downloadable app) may be at least temporarily stored in a machine-readable storage medium such as the memory 110 of a server of a manufacturer, a server of an application store, or a relay server, or may be temporarily generated.

Each of components (for example, modules or programs) according to the diverse embodiments of the disclosure as described above may include a single entity or a plurality of entities, and some of the corresponding sub-components described above may be omitted or other sub-components may be further included in the diverse embodiments. Alternatively or additionally, some of the components (e.g., the modules or the programs) may be integrated into one entity, and may perform functions performed by the respective corresponding components before being integrated in the same or similar manner.

Operations performed by the modules, the programs, or other components according to the diverse embodiments may be executed in a sequential manner, a parallel manner, an iterative manner, or a heuristic manner, at least some of the operations may be performed in a different order or be omitted, or other operations may be added.

According to one or more embodiments, the term "unit" or "module" used in the disclosure may include units configured by hardware, software, or firmware, and may be used compatibly with terms such as, for example, logics, logic blocks, components, circuits, or the like. The "~er/or" element or "module" may be an integrally configured component or a minimum unit performing one or more functions or a part thereof. For example, the module may be configured by an application-specific integrated circuit (ASIC).

Embodiments of the disclosure may be implemented by software including instructions stored in a machine-readable storage medium (for example, a computer-readable storage medium). A machine may be an apparatus that invokes the stored instruction from the storage medium and may be operated depending on the invoked instruction, and may include the electronic device (for example, the electronic device 100) according to the disclosed embodiments.

In a case where a command is executed by the processor, the processor may directly perform a function corresponding to the command or other components may perform the function corresponding to the command under a control of the processor. The command may include codes created or executed by a compiler or an interpreter.

Hereinafter, although exemplary embodiments of the present disclosure have been illustrated and described, the present disclosure is not limited to the above-described specific exemplary embodiments, but may be variously modified by those skilled in the art to which the present disclosure pertains without departing from the gist of the present disclosure as disclosed in the accompanying claims. These modifications should also be understood to fall within the scope and spirit of the present disclosure.

## Claims

1. An electronic device comprising:
at least one processor configured to accelerate at least one operation of a neural network model; and
a memory configured to store data associated with the neural network model, and instructions which, when executed by the at least one processor, cause the electronic device to:
identify a range of input values corresponding to each layer from among a plurality of layers related to a nonlinear activation function of the neural network model,
divide the range of input values into a plurality of sections having a first predetermined number for the each layer based on the range of input values,
acquire, for the each layer a first look up table (LUT) comprising a plurality of integer input values corresponding to the plurality of sections, and a plurality of integer output values corresponding to the plurality of integer input values by quantizing input data corresponding to the neural network model based on the plurality of sections, and
process an operation according to the nonlinear activation function as an integer operation based on the first LUT.

2. The electronic device as claimed in claim 1, wherein the plurality of layers comprises a first layer corresponding to a first range divided into a first plurality of sections, and a second layer corresponding to a second range divided into a second plurality of sections, and
wherein the instructions, when executed by the at least one processor, further cause the electronic device to determine a size of the first plurality of sections to be larger than a size of the second plurality of sections based on the first range being wider than the second range.

3. The electronic device as claimed in claim 1, wherein the instructions, when executed by the at least one processor, further cause the electronic device to:
based on determining that at least one section has an error in an output value that is greater than or equal to a threshold value, divide the at least one section from among the plurality of sections into a plurality of detailed sections having a second predetermined number,
acquire a second LUT comprising a plurality of detailed integer input values and a plurality of detailed integer output values corresponding to the plurality of detailed sections, and
process the operation as the integer operation based on the first LUT and the second LUT.

4. The electronic device as claimed in claim 3, wherein the instructions, when executed by the at least one processor, further cause the electronic device to:
based on an average error between the first integer output value and real number output values corresponding to the first integer output value being greater than or equal to the threshold value, identify a section corresponding to a first integer output value from among the plurality of sections as the at least one section .

5. The electronic device as claimed in claim 3, wherein the second predetermined number of the plurality of detailed sections is smaller than the first predetermined number of the plurality of sections.

6. The electronic device as claimed in claim 5, wherein the input data is quantized into sixteen bits,
wherein the plurality of integer input values and the plurality of integer output values included in the first LUT are quantized into eight bits, and
wherein the plurality of detailed integer input values and the plurality of detailed integer output values included in the second LUT are quantized into four bits.

7. The electronic device as claimed in claim 6, wherein the instructions, when executed by the at least one processor, further cause the electronic device to:
based on a first input value being received, identify a first section corresponding to the first input value and a second section subsequent to the first section using the first LUT ,
acquire an integer output value corresponding to a real number input value by linearly interpolating a first integer output value corresponding to the first section and a second integer output value corresponding to the second section from among the plurality of integer output values, and
acquire a real number output value corresponding to the real number input value by converting the integer output value into a real number based on a parameter used for the quantizing.

8. The electronic device as claimed in claim 7, wherein the plurality of integer input values and the plurality of integer output values included in the first LUT are quantized based on a value corresponding to an upper eight bits from among the sixteen bits, and
wherein the instructions, when executed by the at least one processor, further cause the electronic device to linearly interpolate the first integer output value and the second integer output value using a value corresponding to a lower eight bits from among the sixteen bits as a weight.

9. The electronic device as claimed in claim 1, wherein the instructions, when executed by the at least one processor, further cause the electronic device to:
based on the nonlinear activation function being an activation function in which each input value is affected by a different input value, divide the nonlinear activation function into a plurality of operations ,
acquire the first LUT for performing at least one nonlinear operation from among the plurality of operations, and
process the at least one nonlinear operation as the integer operation based on the first LUT.

10. A method for controlling an electronic device, the method comprising:
identifying a range of input values corresponding to each layer from among a plurality of layers related to a nonlinear activation function of a neural network model;
dividing the range of input values into a plurality of sections having a first predetermined number for the each layer based on the range of input values;
acquiring, for the each layer, a first look up table (LUT) comprising a plurality of integer input values corresponding to the plurality of sections and a plurality of integer output values corresponding to the plurality of integer input values by quantizing input data corresponding to the neural network model based on the plurality of sections; and
processing an operation according to the nonlinear activation function as an integer operation based on the first LUT.

11. The method as claimed in claim 10, wherein the plurality of layers comprises a first layer corresponding to a first range divided into a first plurality of sections, and a second layer corresponding to a second range divided into a second plurality of sections, and
wherein the method further comprises:
determining a size of the first plurality of sections to be larger than a size of the second plurality of sections based on the first range being wider than the second range.

12. The method as claimed in claim 10, further comprising:
based on determining that at least one section has an error in an output value that is greater than or equal to a threshold value, dividing the at least one section from among the plurality of sections into a plurality of detailed sections having a second predetermined number ;
acquiring a second LUT comprising a plurality of detailed integer input values and a plurality of detailed integer output values corresponding to the plurality of detailed sections; and
processing the operation as the integer operation based on the first LUT and the second LUT.

13. The method as claimed in claim 12, wherein the dividing of the at least one section into the plurality of detailed sections comprises:
identifying a section corresponding to a first integer output value from among the plurality of sections as the at least one section based on an average error between the first integer output value and real number output values corresponding to the first integer output value being greater than or equal to the threshold value.

14. The method as claimed in claim 12, wherein the second predetermined number of the plurality of detailed sections is smaller than the first predetermined number of the plurality of sections.

15. The method as claimed in claim 14, wherein the input data is quantized into sixteen bits,
wherein the plurality of integer input values and the plurality of integer output values included in the first LUT are quantized into eight bits, and
wherein the plurality of detailed integer input values and the plurality of detailed integer output values included in the second LUT are quantized into four bits.
